# EUROPÄISCHE PATENTSCHRIFT

(11) **EP 1 445 145 B1**
(45) Veröffentlichungstag und Bekanntmachung des Hinweises auf die Patenterteilung: **16.08.2006**
(21) Anmeldenummer: 03002474.9
(22) Anmeldetag: 05.02.2003
(51) Int. Cl.: B60P 1/44, B60P 1/16

(54) **Ladebordwandsystem mit wenigstens einem Klappaktuator und einem Hubaktuator**
Lifting tail gate system with at least one pivoting actuator and lifting actuator
Sytème de hayon élévateur avec au moins un actionneur pour pivotement et élévation

(43) Veröffentlichungstag der Anmeldung: 11.08.2004
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(56) Entgegenhaltungen:
- EP-A- 0 832 783
- EP-A- 1 010 575
- DE-A- 19 756 310
- US-A- 5 255 517

## Beschreibung

Die Erfindung betrifft ein Ladebordwandsystem zur Befestigung an Fahrzeugen, insbesondere Lastkraftfahrzeugen, umfassend jeweils ein im wesentlichen parallelogrammförmiges, aus zwei im wesentlichen parallel voneinander beabstandeten Tragwerken bestehendes Hub- und Klapptragwerk, eine im wesentlichen plattenförmige Ladebordwand zum Heben und Absenken einer Last und zum Verschließen eines Stauraumes des Fahrzeuges und eine Aktuatoreinrichtung zum Heben und Senken der Ladebordwand sowie eine Aktuatoreinrichtung zum Verschwenken der Ladebordwand von der Horizontalen in die Vertikale und umgekehrt, die in Form eines doppeltwirkenden Zylinders ausgebildet ist, wobei ein einziger Elektromotor über eine Pumpe (200) einen Betriebsdruck eines Hydraulikmittels sowohl für die Klappaktion der den Klappvorgang bewirkenden Aktuatoreinrichtung als auch für die Hubaktion der den Hubvorgang bewirkenden Aktuatoreinrichtung bewirkt.

Aus der DE-A-197 56 310 ist ein Ladebordwandsystem mit Überlastschutz bekannt, wobei das dort in dem Zusammenhang mit dem Überlastschutz beschriebene Ladebordwandsystem ein Ladebordwandsystem konventioneller Art ist, wie es seit mehreren Jahrzehnten technisch realisiert ist. Bei derartigen, seit langer Zeit bekannten Systemen, wird der erforderliche Druck für ein Hydraulikmittel für die Betätigung einer Hub- und Klappeinrichtung mittels einer Pumpe erzeugt, die mittels eines Elektromotors angetrieben wird. Eine Betätigung der Hub- und/oder Klappfunktion des Ladebordwandsystems erfolgt über manuell betätigbare Handhaben durch eine Bedienungsperson, die auf Ventile wirken, die ihrerseits das unter Druck gesetzte Hydraulikmittel in die Hub- und/oder Klappzylindereinrichtungen eintreten bzw. aus diesen heraustreten lassen. Sowohl der Elektromotor als auch die Pumpeneinrichtung für das Hydraulikmittel sind am Fahrzeug, abgesetzt von dem eigentlichen Ladebordwandsystem, angeordnet und über gesondert zu installierende Hydraulikleitungen mit der Hub- und/oder Klappzylindereinrichtung verbunden. Diese bekannte, seit Jahrzehnten gewählte Konstruktion weist Nachteile auf, was sich aus dem Nachfolgenden ergibt.

Ladebordwandsysteme, wie aus der EP-A-1 010 575 und der EP-A-0 808 747 bekannt, finden insbesondere Anwendung bei Lastkraftfahrzeugen, um mit den Lastkraftfahrzeugen zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das Gleiche gilt für den Beladevorgang eines Lastkraftfahrzeuges, d.h. die Last wird auf die sich auf der Fahrbahnebene befindliche Ladebordwand aufgebracht, die Ladebordwand wird auf die Höhe der Ladeplattform des Lastkraftfahrzeuges angehoben und nachfolgend auf die Ladeplattform verbracht. Ist der End- bzw. Beladevorgang beendet, wird die Ladebordwand aus der Horizontalen, in der sie sich zum Be- und Entladen befand, in die Vertikale verschwenkt, so daß die Ladebordwand als rückwärtiger Abschluß der Ladefläche bzw. eines kofferartig ausgestalteten Laderaumes dienen kann.

Für das Heben und Senken der Ladebordwand in im wesentlichen horizontaler Ausrichtung für den Be- und Entladevorgang von der Ebene der Ladefläche eines Lastkraftfahrzeuges auf die Fahrbahn und von der Fahrbahn auf die Ebene der Ladefläche wird eine Aktuatoreinrichtung, die vielfach Hubaktuatoreinrichtung genannt wird, verwendet. Für das Verschwenken der Ladebordwand für das Öffnen und Schließen des eigentlichen Laderaumes aus der Horizontalen in die Vertikale und umgekehrt wird eine Aktuatoreinrichtung verwendet, die vielfach als sogen. Klappaktuatoreinrichtung bezeichnet wird. Ladebordwandsysteme der vorbeschriebenen Art können somit, wie oben gattungsgemäß beschrieben, zumindest je eine Aktuatoreinrichtung umfassen, nämlich wenigstens eine für die Ausführung des Hubvorganges der dafür bestimmten Aktuatoreinrichtung und eine Aktuatoreinrichtung für den Klappvorgang der Ladebordwand. Die jeweiligen Aktuatoreinrichtungen zur Ausführung des Hub- und zur Ausführung des Klappvorganges, wirken mit dem Tragwerk des Ladebordwandsystems, gebildet aus dem parallelförmigen Hub- und Klapptragwerk, zusammen. Die Aktuatoreinrichtung für das Anheben und Absenken der Ladebordwand (Hubaktuatoreinrichtung) arbeitet mit dem einen Tragwerk des parallelogrammförmigen Hub- und Klapptragwerks zusammen, wohingegen die Aktuatoreinrichtung, die für den Klappvorgang der Ladebordwand (Klappaktuatoreinrichtung) bestimmt ist, mit dem anderen Tragwerk zusammenarbeitet.

Die Aktuatoreinrichtung für den Hubvorgang der Ladebordwand und die Aktuatoreinrichtung für den Klappvorgang der Ladebordwand werden in bezug auf die jeweiligen Bewegungen der Ladebordwand von einer an geeigneter Stelle am Fahrzeug angebrachten Bedieneinrichtung aus gesteuert, wobei entsprechende Bedienungsbefehle durch eine Bedienungsperson mittels geeigneter Bedienelemente an der Betätigungseinrichtung ausgeführt werden können. Bei dem oben beschriebenen konventionellen Ladebordwandsystem gemäß der EP-A-0 808 747 ist für die Betätigung des Aktuators bzw. der Aktuatoren für das Heben und Absenken der Ladebordwand und für die Betätigung des Aktuators bzw. der Aktuatoren für den Klappvorgang der Ladebordwand ein zentrales Hydrauliksystem vorgesehen, das mittels eines Elektromotors oder mehrerer Elektromotoren betriebenen Pumpe betrieben wird. Über geeignete Ventilmittel zwischen der Pumpe und dem Aktuator für das Heben und Senken der Ladebordwand und dem Aktuator für den Hubvorgang der Ladeplattform kann der jeweilige Aktuator betätigt werden.

Unabhängig davon, ob bei einem Ladebordwandsystem ein Aktuator oder zwei Aktuatoren für die Ausführung des Hebens und Senkens der Ladeplattform und ein Aktuator oder zwei Aktuatoren für die Ausführung des Klappvorgangs der Ladebordwand vorhanden sind, sind alle diese Aktuatoren über ein Hydraulikleitungsnetz mit den besagten jeweiligen Ventilen bzw. einem Ventilblock verbunden, über das die Hydrauliksteuerung der Aktuatoren für das Heben und Absenken und der Aktuator für das Klappen der Ladebordwand betätigt wird. Zudem sind für das Hydraulikmittel ein Tank vorgesehen, eine Pumpe bzw. mehrere Pumpen sowie ein Elektromotor bzw. mehrere Elektromotoren, elektromagnetische Einrichtungen zur Betätigung der Ventile, Relaissteuerung und dgl. sowie eine zentrale Bedienungseinheit, über die die eigentliche Steuerung des Ladebordwandsystems erfolgt. Es sind also bei dem konventionellen Ladebordwandsystem, nachdem das Ladebordwandsystem an einem Fahrzeug befestigt ist, noch viele Hydraulik- und Elektroverbindungen, wenn es sich bei den Aktuatoren um Kolbenzylindersysteme handelt, auszuführen, um das Ladebordwandsystem zur vollen Funktionsfähigkeit zu bringen.

Dieses ist, wie leicht erkennbar, mit erheblicher manueller Tätigkeit in bezug auf Installation und Befestigung verbunden, was das Ladebordwandsystem grundsätzlich sehr kostenträchtig werden läßt. Zudem sind für die gesamten Einzelteile hohe Lagerhaltungskosten die Folge und eine kostenträchtige Verwaltung derartiger Lagerbevorratung. Ein weiteres wichtiges Problem bei Ladebordwandsystemen der auf voraufgeführte konventionelle Weise ausgebildeten Ladebordwandsysteme besteht darin, daß aufgrund der Leitungen elektrischer und hydraulischer Art sowie sonstiger Steuerungseinrichtungen der dafür benötigte Platz vielfach bei kleinen Fahrzeugen gar nicht vorhanden ist, so daß das Ladebordwandsystem eben bei diesen kleinen Fahrzeugen gar nicht eingesetzt werden kann, obwohl grundsätzlich dafür ein Bedürfnis besteht.

Ein weiteres wichtiges Problem bei den bisherigen, auf konventionelle Art ausgebildeten Ladebordwandsystemen besteht schließlich darin, daß dann, wenn ein hydraulisch betriebener Aktuator bspw. aufgrund eines Defekts der Hydraulikleitung ausfällt, das ganze Ladebordwandsystem unbrauchbar wird, d.h. auch seine Minimalfunktionen verliert, was dazu führt, daß ein mit dem bekannten konventionellen Ladebordwandsystem ausgerüsteten Fahrzeug an Ort und Stelle des aufgetretenen Defekts repariert werden muß, da weder ein Anheben der Ladebordwand noch ein Klappen der Ladebordwand möglich ist, d.h. es ist dann regelmäßig nicht möglich, mit dem Fahrzeug zu einer Reparaturstätte zu fahren. Die Reparatur muß, was sehr aufwendig ist, vor Ort zumindest in dem Umfang durchgeführt werden, daß das Fahrzeug zu einer Reparaturstätte verbracht werden kann.

Mit dem gegenüber dem konventionellen Ladebordwandsystem weiterentwickelten Ladebordwandsystem gem. der EP-A-1 010 575 ist hingegen schon eine erhebliche Reduzierung der Einzelteile, aus denen ein Ladebordwandsystem normalerweise besteht, möglich geworden, wobei die Funktionsfähigkeit des Ladebordwandsystems dieser bekannten Art uneingeschränkt aufrechterhalten wird. Zudem ist es mit dem gattungsgemäßen Ladebordwandsystem möglich, ein höheres Maß an Betriebssicherheit gegenüber dem bekannten konventionellen Ladebordwandsystem zu erreichen und es ist gegenüber dem konventionellen System ebenfalls auch möglich geworden, eine drastische Reduzierung des Installationsaufwandes des Ladebordwandsystems an dem Fahrzeug, an dem es bestimmungsgemäß angebaut und verwendet werden soll, zu erreichen. Dadurch ist es auch möglich geworden, das weiterentwickelte Ladebordwandsystem an kleinen Fahrzeugen anbringen zu können, bei denen die bekannten konventionellen Systeme bisher nicht oder nur sehr schwierig angebracht werden konnten. Schließlich war es auch möglich, die Gestehungskosten gegenüber bisherigen bekannten konventionellen Ladebordwandsystemen zu reduzieren und demgemäß auch die Lagerhaltungskosten.

Mittels dieses Lösungswegs war eine weitgehende Zentralisierung des Antriebs der Aktuatoreinrichtung, die für das Anheben und Absenken der Ladebordwand vorgesehen ist, möglich und zwar dadurch, daß dem Aktuator, der den Hub- und Absenkvorgang der Ladeplattform bewegt, ein Elektromotor zugeordnet ist, oder dann, wenn mehrere Hubaktuatoren vorgesehen sind, ggf. jeweils jedem Aktuator, der für den Hubvorgang und den Absenkvorgang der Ladebordwand Verantwortung zeigt, jeweils einem Elektromotor vorzusehen. In diesem Falle braucht lediglich eine elektrische Verbindung zu einer zentralen Steuerungseinrichtung am Fahrzeug installiert zu werden, wobei Elektroleitungen so gut vorkonfektioniert werden können, daß sie, mit entsprechenden Buchsen oder Stekkern versehen, nur noch am zentralen Steuergerät in entsprechende Buchsen und Stecker hineingesteckt zu werden brauchen, so daß dann sofort eine vollständige Funktionsfähigkeit gewährleistet ist.

Bei der Herstellung des Ladebordwandsystems dieser Art kann somit die gesamte Installation für den bestimmungsgemäßen Betrieb praktisch fertiggestellt sein, so daß das fertige Ladebordwandsystem faktisch nur noch am Fahrzeug befestigt werden muß. Es ist sogar möglich, daß aufgrund der Zuordnung je eines Elektromotors zu der Aktuatoreinrichtung zur Ausführung des Hebens und des Senkens der Ladebordwand oder mehrere Elektromotoren, falls mehrere Aktuatoren zur Ausführung des Hub- und Absenkvorganges vorgesehen werden, faktisch auch noch ein Notbetrieb aufrechterhalten werden kann. Dieses insbesondere dann, wenn bspw. bei zwei vorgesehenen Aktuatoreinrichtungen zur Ausführung des Hubes und des Absenkens der Ladebordwand ein Elektromotor eines jeweiligen Aktuators ausfällt.

Bei diesem Ladebordwandsystem ist es nötig, wenn neben dem Aktuator zur Ausführung des Hub- und Senkvorganges der Ladeplattform auch ein Aktuator zur Ausführung des Klappvorganges der Ladebordwand vorgesehen ist, jedem der Aktuatoren einen gesonderten Elektromotor zuzuordnen. Wenn allerdings bei Betriebsstörungen entweder der Aktuator für die Ausführung des Hub- und Senkvorganges der Ladeplattform oder der Hubaktuator für die Ausführung des Klappvorganges vorgesehen ist, d.h. in diesem Falle ist jedem Aktuator je ein Elektromotor zugeordnet, einer dieser Elektromotoren bspw. defekt ist, ist das gesamte Ladebordwandsystem außer Betrieb gesetzt, denn das Fahrzeug kann bspw. dann weder mit abgesenkter Ladebordwand fahren noch kann es bspw. im heruntergeklappten Zustand der Ladebordwand verkehrssicher zu einer Reparaturwerkstätte verbracht werden. Das Vorhandensein je eines Elektromotors für den Aktuator für die Ausführung der Hub- und Senkbewegung der Ladeplattform und für den Aktuator für die Ausführung der Klappbewegung bringt somit keine Vorteile in bezug auf die Erhöhung der Betriebssicherheit der Ladeplattform. Zudem ist das Vorsehen je eines Elektromotors für je einen Aktuator kostenträchtig, ohne daß es, wie vorangehend beschrieben, Vorteile in bezug auf die Betriebssicherheit des Ladebordwandsystems bietet. Zudem ist der Wartungsaufwand des Ladebordwandsystems hoch, wobei das gattungsgemäße Ladebordwandsystem ein zusätzliches Gewicht aufgrund zweier Elektromotoren aufweist und ist zudem auch kostenträchtig.

Aus der gattungsgemäßen EP-A-0 832 783 ist ein Ladebordwandsteuersystem sowie ein Verfahren bekannt, mit dem Ladebordwandsysteme gesteuert werden. Bei dieser Ladebordwandsteuerung sind sowohl ein Hubaktuator als auch ein Klappaktuator vorgesehen. Diese Aktuatoren sind als sog. Kolben-Zylinder-Systeme ausgebildet, wobei eines dieser Kolben-Zylinder-Systeme die eigentliche Ladebordwand auf entsprechende Steuerung hin anhebt und absenkt, wohingegen das andere Kolben-Zylinder-System auf geeignete Steuerung hin die Ladebordwand von der Horizontalen in die Vertikale und von der Vertikalen in die Horizontale klappt. Beide dieser bekannten Kolben-Zylinder-Systeme sind als sog. doppelt-wirkende Zylinder ausgebildet, d.h. daß beide Kolbenseiten des jeweiligen Kolbens im Kolben-Zylinder-System, je nach gesteuerter Bewegungsrichtung, mit Hydraulikmittel beaufschlagt werden bzw. von Hydraulikmittel bereit werden.

Es ist deshalb Aufgabe der vorliegenden Erfindung, ein Ladebordwandsystem der eingangs genannten Art zu schaffen, das bei gleicher Betriebssicherheit wie das gattungsgemäße Ladebordwandsystem einfacher im Aufbau sein soll, kostengünstiger bereitstellbar sein soll, einen verminderten Wartungsbedarf aufweisen soll und ein geringeres Gewicht als bisher aufweisen soll, wobei ebenfalls der Installationsaufwand des Ladebordwandsystems erheblich reduziert werden kann.

Gelöst wird die Aufgabe gem. einer ersten Ausgestaltung der Erfindung dadurch, daß der Elektromotor unmittelbar an der den Klappvorgang bewirkenden Aktuatoreinrichtung angeordnet ist, wobei eine einzige Hydraulikleitung zwischen der Pumpe und der den Hub bewirkenden Aktuatoreinrichtung vorgesehen ist.

Der Vorteil der erfindungsgemäßen Lösung besteht im wesentlichen darin, daß, wie angestrebt, der eine Elektromotor beide Aktuatoren entweder mittelbar oder unmittelbar antreiben kann. Es ist lediglich ein Elektromotor sogar für beide Funktionen der Ladeplattform erforderlich, wodurch der Installationsaufwand zur Ausführung der entsprechenden Steuer- bzw. Kraftverbindungen noch einmal reduziert werden konnte, wodurch das erfindungsgemäße Ladebordwandsystem erheblich kostengünstiger her- und bereitstellbar ist, eine verminderte Lagerhaltung der einzelnen Elemente des Ladebordwandsystems realisiert werden kann sowie insgesamt ein geringeres Gewicht des Ladebordwandsystems ermöglicht wird.

An sich kann der Elektromotor, der jeder Aktuatoreinrichtung zugeordnet sein kann, an beliebiger konstruktiv geeigneter Stelle im Bereich der jeweiligen Aktuatoreinrichtung angeordnet sein. Dadurch, daß der Elektromotor direkt an der den Klappvorgang oder der den Hubvorgang bewirkenden Aktuatoreinrichtung vorgesehen ist, können minimalste Übertragungswege vom Elektromotorantrieb, d.h. der Antriebswelle des Elektromotors mittelbar oder unmittelbar zur Aktuatoreinrichtung, erreicht werden, wodurch Getriebemittel und/oder Hydraulikelemente zum Be trieb der Aktuatoren auf ein Minimum reduziert werden. Zudem gestattet die direkte Anbringung des Elektromotors an der Aktuatoreinrichtung ggf. auch bei Wartungs- und Störungsfällen zum Zwecke des einfachen Austausches die Demontage bzw. Montage der Aktuatoreinrichtung zusammen mit dem Elektromotor, d.h. es ist auf einfache Weise ein modularer Austausch möglich.

Vorteilhaft ist es auch, die Aktuatoreinrichtungen in Form einer hydraulisch betriebenen Kolben-Zylindereinrichtung auszubilden, d.h. den Elektromotor ausschließlich zum Betrieb einer ebenfalls der jeweiligen KolbenZylindereinrichtung zugeordneten jeweiligen Pumpe zu verwenden, die das Hydraulikmittel für den Hub- und Senkvorgang der Ladebordwand und den Klappvorgang der Ladebordwand von der Horizontalen in die Vertikale und umgekehrt bewegt bzw. pumpt. Bei dieser Ausgestaltung des Ladebordwandsystems ist faktisch der Aufbau und der Betrieb realisiert, wie er bei Ladebordwandsystemen konventioneller Art anzutreffen ist, allerdings mit dem Unterschied, daß auch der Antrieb und die Steuerung des erfindungsgemäßen Ladebordwandsystems gegenüber den bekannten, konventionellen Ladebordwandsystemen erreicht wird.

In diesem Falle ist es vorteilhaft, die die Hubaktion bewirkende Aktuatoreinrichtung über die "einzige" Hydraulikleitung mit der durch den an der die Klappaktion bewirkenden Aktuatoreinrichtung angeordneten Elektromotor betriebenen Hydraulikeinheit zu verbinden und die Hydraulikeinheit ebenfalls an der die Klappaktion bewirkenden Aktuatoreinrichtung anzuordnen. Die "einzige" Hydraulikleitung zwischen der durch den Elektromotor betriebenen Hydraulikeinheit, die an dem den Klappvorgang bewirkenden Aktuatoreinrichtung angeordnet ist, ist zum den die klappaktion bewirkenden Aktuator über das ei nzi ge Verbindungsmittel, nämlich die "einzige" Hydraulikleitung realisiert. Dadurch kann, wie angestrebt, nochmals der Aufbau des erfindungsgemäßen Ladebordwandsystems auf ein Minimum an Einzelelementen reduziert werden, was nochmals zur vergrößert kostengünstigen Bereitstellbarkeit und einem geringeren Wartungsaufwand führt.

Um das erfindungsgemäße Ladebordwandsystem noch kompakter und damit preisgünstiger auszubilden, ist der Elektromotor selbst in der Hydraulikeinheit aufgenommen bzw. untergebracht, wobei die Hydraulikeinheit, entweder mit Elektromotor oder ohne Elektromotor, beide Varianten sind erfindungsgemäß möglich, von einem Gehäuse umgeben ist. Dieses Gehäuse, das alle wesentlichen Komponenten des Antriebs und der Steuerung des erfindungsgemäßen Ladebordwandsystems enthalten kann, d.h. auch den Elektromotor, ist an der für den Klappvorgang vorgesehenen Aktuatoreinrichtung, als einheitliches Teil anbringbar bzw. von diesem lösbar. Durch diese Ausgestaltung ist nochmals eine drastische Reduzierung der Herstellungs- und Gestehungskosten möglich und es ist ein sehr vereinfachter Reparatur- und Wartungsbetrieb möglich, da lediglich das besagte Gehäuse, das alle wesentlichen Antriebs- und Steuerelemente des Ladebordwandsystems enthält, von diesem entfernt bzw. an dieses angebaut zu werden braucht.

Die Erfindung wird nun unter Bezugnahme auf die nachfolgenden schematischen Zeichnungen anhand eines Ausführungsbeispieles eingehend beschrieben. Darin zeigen:

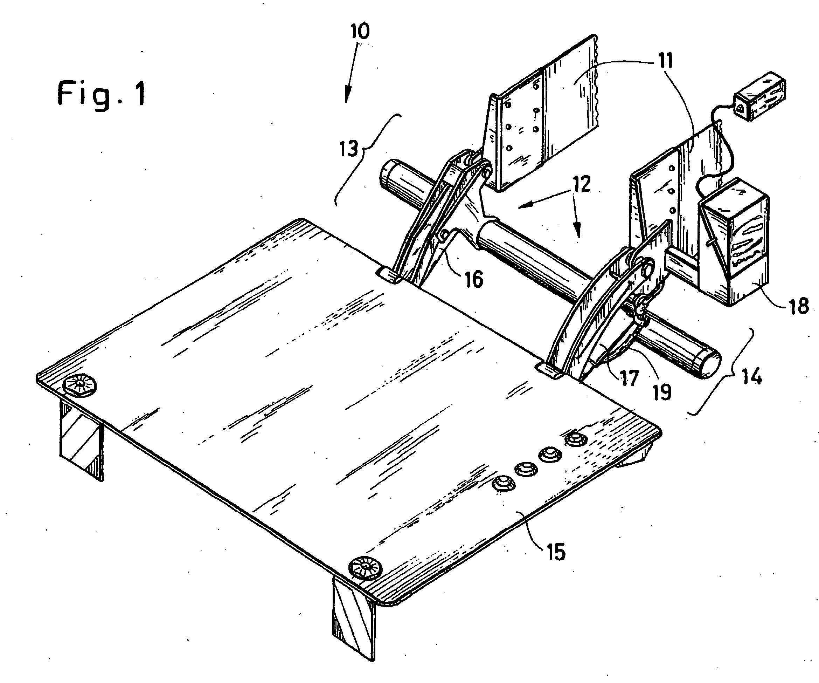

- Fig. 1: ein Ladebordwandsystem, wie es im Stand der Technik bekannt ist, bei dem eine vollständige Installation mittels Elektroleitungen und Hydraulikleitungen zu einer separat angeordneten Bedieneinrichtung erforderlich ist, wobei die Hydraulikleitungen und die Elektroleitungen hier aus Vereinfachungsgründen weggelassen worden sind,

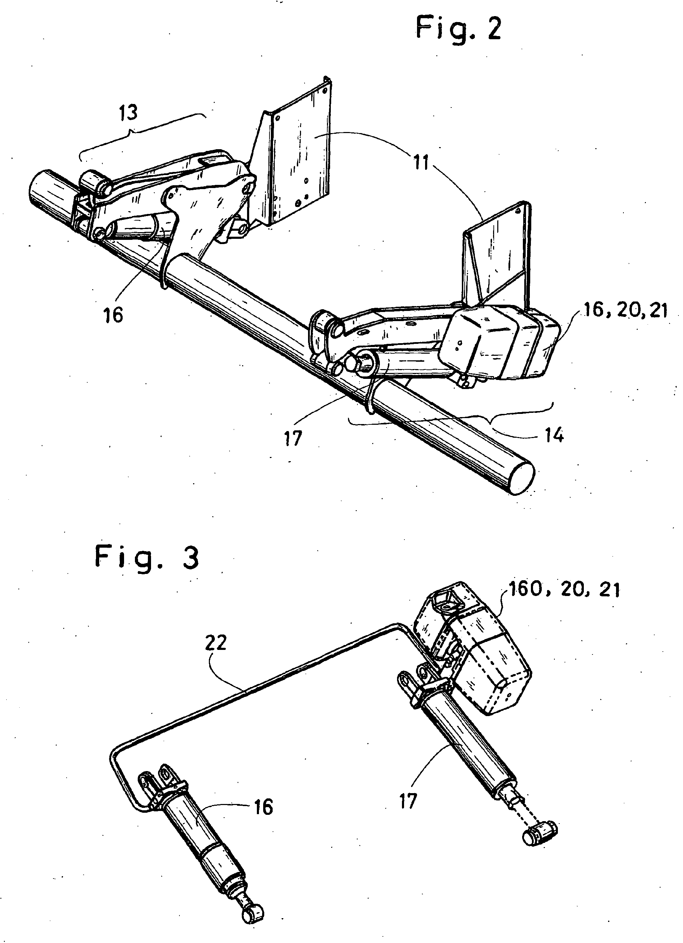

- Fig. 2: ein Ladebordwandsystem gem. der Erfindung, hier zum besseren Verständnis lediglich die Hub- und Klapptragwerke zeigend, an denen die jeweiligen, diese betätigenden Aktuatoren angreifen, wobei direkt am Aktuator zum Klappen der Ladebordwand eine Hydraulikeinheit und ein Elektromotor angeordnet ist, die von einem Gehäuse umgeben sind,
- Fig. 3: eine gegenüber der Darstellung von Fig. 2 nochmals vereinfachte Darstellung unter Weglassung von Einzelheiten des Ladebordwandsystems, die einzige Verbindungsleitung, ausgebildet als Hydraulikleitung, zwischen der Hydraulikeinheit und dem Elektromotor, die von einem Gehäuse umgeben sind, zwischen dem Aktuator zur Ausführung des Klappvorganges und dem Aktuator zum Anheben und Absenken der Ladebordwand zeigend, und

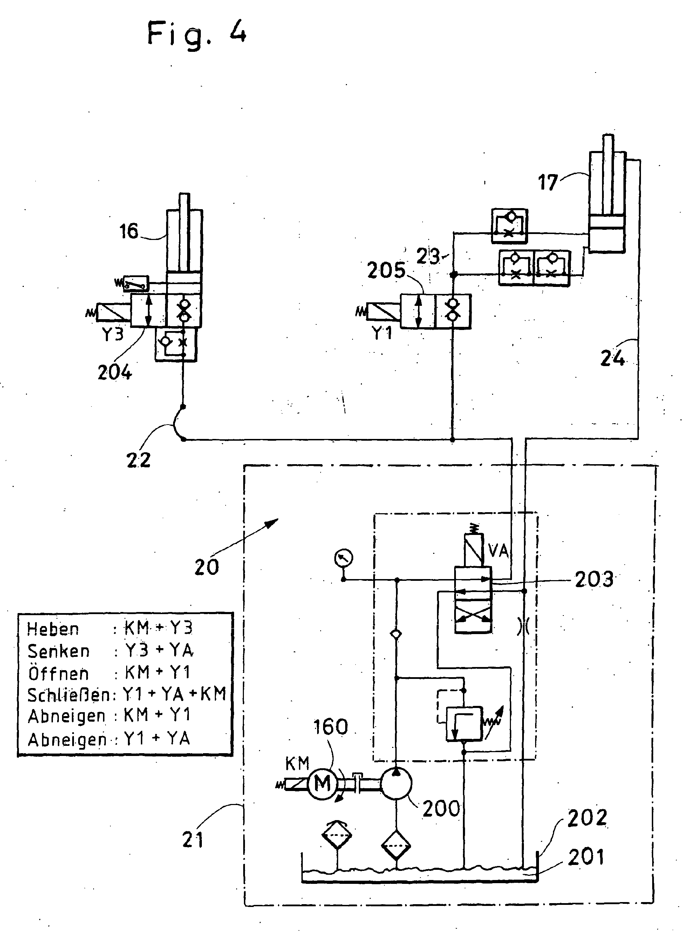

- Fig. 4: einen typischen Schaltplan eines Hydrauliksystems zum Betrieb des erfindungsgemäßen Ladebordwandsystems.

Es wird zunächst Bezug genommen auf Fig. 1, in der ein konventionelles Ladebordwandsystem dargestellt ist. Konventionelle Ladebordwandsysteme sind allgemein bekannt, so daß hier der Aufbau und die Funktion nur kurz erklärt werden. Ein typisches Ladebordwandsystem 10 ist bspw. in der EP-A-0 808 747 beschrieben, auf das im Hinblick auf den allgemeinen Aufbau Bezug genommen wird. Bei dem hier dargestellten Ladebordwandsystem 10 handelt es sich um ein solches, bei dem lediglich eine Aktuatoreinrichtung 16 für den Hub- und Absenkvorgang vorgesehen ist, im folgenden kurz Hubaktuatoreinrichtung 16 genannt. Mit der Hubaktuatoreinrichtung 16 wird ein Anheben und Absenken in vertikaler Richtung der Ladebordwand 15 bewirkt, auf dem eine hier nicht dargestellte Last bspw. von einer Fahrbahn oder dgl. auf eine Höhe angehoben werden soll, die der einer Ladeplattform eines Fahrzeuges 11 entspricht, um die Last auf die Ladefläche des Fahrzeugs 11 verbringen zu können. Vom Fahrzeug 11 sind hier lediglich Träger eines Chassis dargestellt, was zum Verständnis des Ladebordwandsystems 10 ausreicht. Die Aktuatoreinrichtung 17, die zur Ausführung des Klappvorganges dient, im folgenden kurz Klappaktuatoreinrichtung 17 genannt, mit der die Ladebordwand 15 von der Horizontalen, wie in Fig. 1 dargestellt, in die Vertikale geklappt werden kann, um bspw. die Ladefläche eines Fahrzeugs 11 zu verschließen, bzw. diese wieder freizugeben, bzw. zu öffnen, um den Ent- und Beladevorgang mit Lasten zu ermöglichen, ist hier in horizontaler Ausrichtung dargestellt.

Bei dem in Fig. 1 dargestellten Ladebordwandsystem 10 sind die Hubaktuatoreinrichtung 16 und die Klappaktuatoreinrichtung 17 über eine Vielzahl von Hydraulikleitungen 19 miteinander verbunden, wobei darauf hinzuweisen ist, daß in Fig. 1 lediglich eine der Hydraulikleitungen 19 symbolisch dargestellt ist und wobei diese mit einem Ventilblock und mit einem Hydraulikmitteltank verbunden sind (hier nicht gesondert dargestellt). In das Hydrauliksystem ist eine Pumpe oder es sind mehrere Pumpen integriert, die mittels eines Elektromotors, ggf. auch mehrerer Elektromotoren, Pumpe und Elektromotor sind hier nicht dargestellt, angetrieben werden, um den nötigen Betriebsdruck des Hydraulikmittels zu erzeugen. Die am Fahrzeug angebrachte Bedieneinrichtung 18 ist über elektrische Steuerleitungen mit der Hydraulikschaltung über Steuerelemente wie Relais, Schalter und dgl. auf an sich bekannte Weise verbunden, so daß die standardmäßigen Bewegungen der Ladebordwandsysteme 15 wie Heben und Senken in der Horizontalen und ein Klappen aus der Vertikalen in die Horizontale und zurück über die entsprechend mit Hydraulikmittel beaufschlagten Hub- und Klappaktuatoren 16, 17 bewirkt werden können.

Das in Fig. 2 dargestellte erfindungsgemäße Ladebordwandsystem 10 unterscheidet sich gegenüber dem bekannten, auf konventionelle Weise ausgebildeten Ladebordwandsystem 10 gem. Fig. 1 im wesentlichen darin, daß die Klappaktuatoreinrichtung 17 einen "einzigen" dieser zugeordneten Elektromotor 160 aufweist. Der Elektromotor 160 ist bei dem in Fig. 2 dargestellten Ladebordwandsystem seitlich an der Klappaktuatoreinrichtung 17 angeordnet. Der Elektromotor 160 ist hier über ein Gehäuse 21 integral mit der Klappaktuatoreinrichtung 17 ausgebildet. Im Gehäuse 21 ist zudem eine Hydraulikeinheit 20 angeordnet, wie sie bspw. in Form einer Hydraulikschaltung gem. Fig. 4 ausgebildet ist. Auf die Funktion der an sich bekannten Hydraulikschaltung gem. Fig. 4 wird noch weiter unten, soweit für das Verständnis der Erfindung erforderlich, noch eingegangen werden.

Im Gehäuse 21 ist wenigstens der Elektromotor 160 angeordnet sowie die Hydraulikeinheit 20, vgl. Fig. 4. Von der Hydraulikeinheit 20, vgl. insbesondere auch Fig. 3, führt die schon erwähnte Hydraulikleitung 22 zum Hubaktuator 16. Die Hydraulikeinheit 20 kann den Elektromotor 160 auch integral umfassen, wie es in Fig. 4 dargestellt ist.

Die in dem Gehäuse 21 angeordnete Hydraulikeinheit 20, in Fig. 4 strichpunktiert umrandet (großes umrandetes Feld), umfaßt den Elektromotor 160, der eine Pumpe 200 antreibt, die Hydraulikmittel 201 aus einem Hydrauliktank 202 auf ein Wegeventil 1 (Zweiwegeventil) 203 fördert. Das Hydraulikmittel 201 wird dann über das Wegeventil 203 zu einem unmittelbar dem Hubzylinder 16, vgl. auch Fig. 3 links, zugeführt.

Das vom Wegeventil 203 zugeführte Hydraulikmittel 202 wird ebenfalls dem Wegeventil 204 zugeführt, das mit dem Klappaktuator 17 verbunden ist.

Der Antrieb des Motors 160 i.V.m. der Schaltung der Wegeventile 203, 204 und 205 ergibt sich aus der in Fig. 4 dargestellten Tabelle.

Gem. der Erfindung ist lediglich eine "einzige" Hydraulikleitung 22, symbolisch in Fig. 4 teilkreisförmig dargestellt, erforderlich, vgl. auch Fig. 3, und zwar zwischen der Hydraulikeinrichtung 20, die ebenfalls den Elektromotor 160 in dem Gehäuse 21 aufnimmt, vgl. die Fig. 2 und 3.

Die Klappaktuatoreinrichtung 17 ist in Form eines doppeltwirkenden Zylinders ausgebildet, vgl. Fig. 4 oben rechts, wobei in die eine Kammer des Zylinders der Klappaktuatoreinrichtung 17 die Hydraulikleitung 23 für den Klappvorgang der Ladebordwand 15 von der Horizontalen in die Vertikale führt, wohingegen die Hydraulikleitung 24 in die andere Kammer der Klappaktuatoreinrichtung 17 führt, die als Kolbenzylindereinrichtung ausgebildet ist. Der Hubzylinderaktuator 16 ist gleichermaßen als Kolbenzylindereinrichtung ausgebildet, allerdings nur mit einer Kammer.

Über die Hydraulikleitung 24 wird der Klappvorgang der Ladebordwand 15 von der vertikalen Endstellung in die horizontale Stellung eingeleitet, da in vertikaler Endstellung die Schwerkraft auf die Ladebordwand 15 nicht einwirken kann, um den Klappvorgang aus der Vertikalen in die Horizontale einzuleiten. Durch Druckbeaufschlagung der einen Kammer des Kolben-Zylindersystems des Klappaktuators 17 über die Hydraulikleitung 24 kann zunächst die Ladebordwand 15 geringfügig aus der vertikalen Endstellung herausgeführt werden, wobei dann der weitere Klappvorgang in die horizontale Endstellung durch Schwerkraft erfolgt. Aus diesem Grunde sind für die Klappaktuatoreinrichtung 17 zwei Hydraulikleitungen 23, 24, zu je einer Kammer des Kolbenzylindersystems geführt, erforderlich.

### Bezugszeichenliste

- 10: Ladebordwandsystem
- 11: Fahrzeug
- 12: Hub- und Klapptragwerk
- 13: erstes Tragwerk
- 14: zweites Tragwerk
- 15: Ladebordwand
- 16: Aktuatoreinrichtung (Hub)
- 160: Elektromotor
- 17: Aktuatoreinrichtung (Klapp)
- 18: Bedieneinheit
- 19:
- 20: Hydraulikeinheit
- 200: Pumpe
- 201: Hydraulikmittel
- 202: Hydrauliktank
- 203: Wegeventil
- 204: Wegeventil 1
- 205: Wegeventil 1
- 21: Gehäuse
- 22: Hydraulikleitung
- 23: Hydraulikleitung
- 24: Hydraulikleitung

## Patentansprüche

1. Ladebordwandsystem (10) zur Befestigung an Fahrzeugen (11), insbesondere Lastkraftfahrzeugen, umfassend jeweils ein im wesentlichen parallelogrammförmiges, aus zwei im wesentlichen parallel voneinander beabstandeten Tragwerken (13, 14) bestehendes Hub- und Klapptragwerk (12), eine im wesentlichen plattenförmige Ladebordwand (15) zum Heben und Absenken einer Last und zum Verschließen eines Stauraumes des Fahrzeuges (11) und eine Aktuatoreinrichtung (16) zum Heben und Senken der Ladebordwand sowie eine Aktuatoreinrichtung (17) zum Verschwenken der Ladebordwand (15) von der Horizontalen in die Vertikale und umgekehrt, die in Form eines doppeltwirkenden Zylinders ausgebildet ist, wobei ein einziger Elektromotor (160) über eine Pumpe (200) einen Betriebsdruck eines Hydraulikmittels sowohl für die Klappaktion der den Klappvorgang bewirkenden Aktuatoreinrichtung (17) als auch für die Hubaktion der den Hubvorgang bewirkenden Aktuatoreinrichtung (16) bewirkt, **dadurch gekennzeichnet, daß** der Elektromotor (160) unmittelbar an der den Klappvorgang bewirkenden Aktuatoreinrichtung (17) angeordnet ist, wobei eine einzige Hydraulikleitung (22) zwischen der Pumpe (200) und der den Hub bewirkenden Aktuatoreinrichtung (16) vorgesehen ist.

2. Ladebordwandsystem (10) nach Anspruch 1, **dadurch gekennzeichnet, daß** die Aktuatoreinrichtungen (16, 17) in Form hydraulisch betriebener Kolben-Zylindereinrichtungen ausgebildet sind.

3. Ladebordwandsystem (10) nach Anspruch 2, **dadurch gekennzeichnet, daß** die die Hubaktion bewirkende Aktuatoreinrichtung (16) über die Hydraulikleitung (22) mit einer durch den an der die Klappaktion bewirkenden Aktuatoreinrichtung (17) angeordneten Elektromotor (160) betriebenen Hydraulikeinheit (20) verbunden ist und die Hydraulikeinheit (20) ebenfalls an der die Klappaktion bewirkenden Aktuatoreinrichtung (17) angeordnet ist.

4. Ladebordwandsystem (10) nach Anspruch 3, **dadurch gekennzeichnet, daß** wenigstens der Elektromotor (160) in der Hydraulikeinheit (20) aufgenommen ist.

5. Ladebordwandsystem (10) nach einem oder beiden der Ansprüche 3 oder 4, **dadurch gekennzeichnet, daß** die Hydraulikeinheit (20) von einem Gehäuse (21) umgeben ist.

## Claims

1. Loading tailgate system (10) for attaching to vehicles, (11), in particular goods vehicles, comprising respectively a lifting and folding frame (12) consisting of two frames (13, 14) essentially spaced apart from one another in a parallel arrangement, an essentially board-shaped loading tailgate (15) for lifting and lowering a load and for closing off a stowage space of the vehicle (11) and an actuator unit (16) for lifting and lowering the loading tailgate as well as an actuator unit (17) for pivoting the loading tailgate (15) from a horizontal into a vertical position and vice versa, which is provided in the form of a double-acting cylinder, and a single electric motor (160) generates an operating pressure of a hydraulic medium via a pump (200) for both the folding action of the actuator unit (17) effecting the folding operation and for the lifting action of the actuator unit (16) effecting the lifting operation, **characterised in that** the electric motor (160) is disposed directly on the actuator unit (17) which effects the folding operation and a single hydraulic line (22) is provided between the pump (200) and the actuator unit (16) effecting the lift.

2. Loading tailgate system (10) as claimed in claim 1, **characterised in that** the actuator units (16, 17) are provided in the form of hydraulically operated piston-cylinder units.

3. Loading tailgate system (10) as claimed in claim 2, **characterised in that** the actuator unit (16) effecting the lifting action is connected to a hydraulic unit (20) driven by the electric motor (160) disposed on the actuator unit (17) effecting the folding action, and the hydraulic unit (20) is likewise disposed on the actuator unit (17) effecting the folding action.

4. Loading tailgate system (10) as claimed in claim 3, **characterised in that** at least the electric motor (160) is accommodated in the hydraulic unit (20).

5. Loading tailgate system (10) as claimed in one or both of claims 3 or 4, **characterised in that** the hydraulic unit (20) is surrounded by a housing (21).

## Revendications

1. Système de hayon élévateur (10) pour la fixation sur des véhicules (11), en particulier des véhicules utilitaires, comprenant respectivement une structure de levage et de basculement (12) sensiblement en forme de parallélogramme comprenant des ensembles porteurs (13, 14) espacés sensiblement parallèlement les uns aux autres, un hayon élévateur (15) sensiblement en forme de plateau pour l'élévation et l'abaissement d'une charge et pour la fermeture d'un espace de stockage du véhicule (11), et un dispositif de vérin (16) pour l'élévation et l'abaissement du hayon élévateur, ainsi qu'un dispositif de vérin (17) pour le pivotement du hayon élévateur (15) de la position horizontale à la position verticale et l'inverse, lequel est conçu sous la forme d'un cylindre à double effet, moyennant quoi un unique moteur électrique (160) induit via une pompe (200) une pression de régime d'un moyen hydraulique non seulement pour l'action de basculement du dispositif de vérin (17) induisant le processus de basculement, mais aussi pour l'action d'élévation du dispositif de vérin (16) induisant le processus d'élévation, **caractérisé en ce que** le moteur électrique (160) est placé directement sur le dispositif de vérin (17) induisant le processus de basculement, moyennant quoi une unique conduite hydraulique (22) entre la pompe (200) et le dispositif de vérin (16) induisant l'élévation est prévue.

2. Système de hayon élévateur (10) selon la revendication 1, **caractérisé en ce que** les dispositifs de vérin (16, 17) sont configurés sous la forme de dispositifs piston-cylindre à commande hydraulique.

3. Système de hayon élévateur (10) selon la revendication 2, **caractérisé en ce que** le dispositif de vérin (16) induisant l'action d'élévation est relié par l'intermédiaire de la conduite hydraulique (22) à une unité hydraulique (20) commandée par le moteur électrique (160) disposé sur le dispositif de vérin (17) induisant l'action de basculement, et l'unité hydraulique (20) est également placée sur le dispositif de vérin (17) induisant l'action de basculement.

4. Système de hayon élévateur (10) selon la revendication 3, **caractérisé en ce que** au moins le moteur électrique (160) est logé dans l'unité hydraulique (20).

5. Système de hayon élévateur (10) selon l'une quelconque des revendications 3 ou 4, **caractérisé en ce que** l'unité hydraulique (20) est entourée par un boîtier (21).
